# EUROPEAN PATENT APPLICATION

(11) **EP 2 302 908 A1**
(43) Date of publication of application: **30.03.2011**
(21) Application number: 10171057.2
(22) Date of filing: 28.07.2010
(51) Int. Cl.: H04N 5/44, H04N 5/445, H04N 5/46

(54) **Broadcast reception apparatus**

(30) Priority: 31.08.2009 JP 2009200857
(71) Applicant: Kabushiki Kaisha Toshiba, Tokyo 105-8001 (JP)
(72) Inventor: Miyazawa, Akira, Tokyo 105-8001 (JP); Kuwahara, Kazuki, Tokyo 105-8001 (JP); Kimura, Takahiro, Tokyo 105-8001 (JP)
(74) Representative: HOFFMANN EITLE

(57) **Abstract**

According to one embodiment, a broadcast reception apparatus (100) includes a first receiver (56, 58, or 60), a second receiver (54), and display controller (69). The first receiver (56, 58, or 60) is configured to receive a first broadcast signal from a first channel. The second receiver (54) is configured to receive a second broadcast signal from one of channels as a tuning target other than the first channel. The display controller (69) is configured to control to display a first video on the basis of the first broadcast signal if a signal instructing about tuning of the first channel is input, or to display a second video on the basis of the second broadcast signal if a signal instructing tuning of the channel other than the first channel is input.

## Description

Embodiments described herein relate generally to a technique for outputting a video in accordance with a broadcast signal tuned by a tuner.

As is well known, digitization of television broadcasts has been promoted in recent year. For example in Japan, terrestrial digital broadcasts have started in addition to satellite digital broadcasts, such as broadcasting satellite (BS) digital broadcasts and 110-degree communication satellite (CS) digital broadcasts.

Users tune channels with use of remote controllers. For example, a digital television broadcast reception apparatus receives electric program guide (EPG) information and displays an EPG screen. A user selects a channel which the user desires to watch, referring to program information displayed on the EPG screen. The digital television broadcast reception apparatus tunes a broadcast signal on the basis of the selected channel.

In this type of terrestrial digital broadcasts, a time is required for demodulating a broadcast signal or a decode processing each time a broadcast signal is tuned by switching a channel to another. Therefore, a waiting time occurs before a digital television broadcast reception apparatus outputs a video from a channel selected by switching.

Jpn. Pat. Appln. KOKAI Publication No. 2009-16933 discloses a configuration as follows. That is, when switching channels in a broadcast reception apparatus including plural one-segment broadcast tuner and a digital broadcast tuner, an output from a one-segment broadcast tuner which tunes a broadcast signal from a channel selected by switching is subjected to demodulation and decode processing, and is then output. After completion of further demodulation and decode processing on a broadcast signal tuned by a digital broadcast tuner, the output based on the one-segment broadcast tuner is switched to an output based on the digital broadcast tuner.

A general architecture that implements the various feature of the embodiments will now be described with reference to the drawings. The drawings and the associated descriptions are provided to illustrate the embodiments and not to limit the scope of the invention.
FIG. 1 is an exemplary block diagram illustrating a schematic configuration of a digital television broadcast reception apparatus according to the first embodiment.
Fig. 2 is an exemplary exterior view illustrating a remote controller used for the digital television broadcast reception apparatus according to the first embodiment.
FIG. 3 is an exemplary screen view showing a channel setting according to the first embodiment.
FIG. 4 is an exemplary screen view illustrating a channel list together with a video, according to the first embodiment.
FIG. 5 is an exemplary flowchart illustrating up/down tuning according to the first embodiment.
FIG. 6 is an exemplary flowchart illustrating up/down tuning according to the second embodiment.

Various embodiments will be described hereinafter with reference to the accompanying drawings. In general according to one embodiment, a broadcast reception apparatus includes a first receiver, a second receiver, and display controller. The first receiver is configured to receive a first broadcast signal from a first channel. The second receiver is configured to receive a second broadcast signal from one of channels as a tuning target other than the first channel. The display controller is configured to control to display a first video on the basis of the first broadcast signal received by the first receiver if a signal instructing about tuning of the first channel is input, or to display a second video on the basis of the second broadcast signal received by the second receiver if a signal instructing tuning of the channel other than the first channel is input.

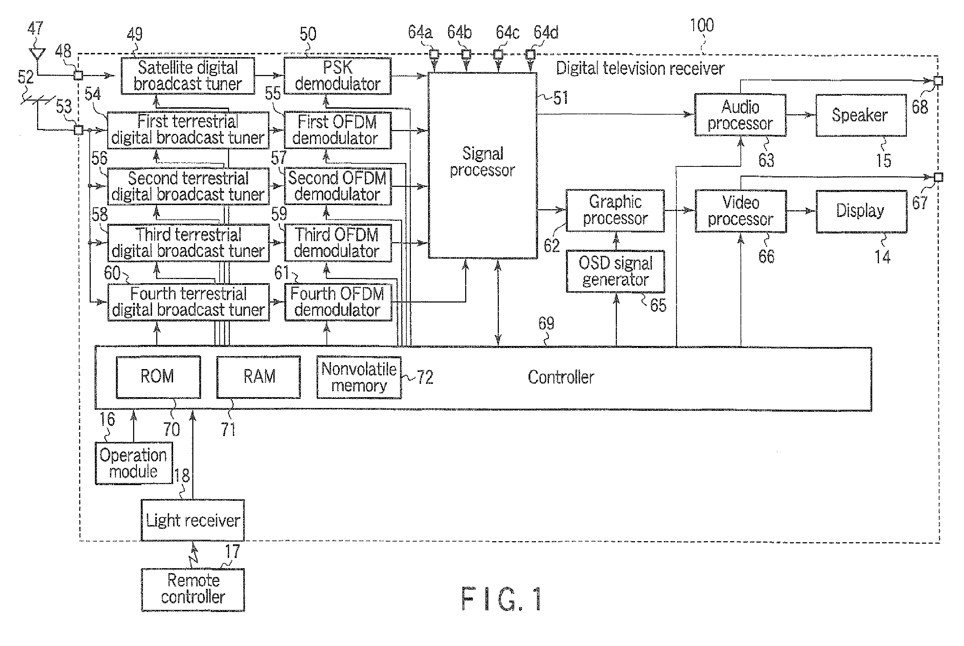

Hereinafter, embodiments will be described with reference to the drawings. FIG. 1 is a block diagram illustrating a schematic configuration of a digital broadcast reception apparatus 100 according to the first embodiment. Specifically, a satellite digital television broadcast signal received by an antenna 47 for receiving BS/CS digital broadcasts is supplied to a satellite digital broadcast tuner 49 through an input terminal 48, thereby to tune a broadcast signal from a desired channel.

The broadcast signal tuned by the satellite digital broadcast tuner 49 is further supplied to a phase shift keying (PSK) demodulator50 and is thereby demodulated into digital video and audio signals, which are then output to a signal processor 51.

Further, a terrestrial digital television broadcast signal received by an antenna 52 for receiving terrestrial broadcasts is supplied to a first terrestrial digital broadcast tuner 54 through an input terminal 53, thereby to tune a broadcast signal from a desired channel. The broadcast signal tuned by the first terrestrial digital broadcast tuner 54 is supplied to a first orthogonal frequency division multiplexing (OFDM) demodulator55 and is thereby demodulated into digital video and audio signals, which are then output to the signal processor 51.

In the same manner as above, another broadcast signal tuned by a second terrestrial digital broadcast tuner 56 is supplied to a second OFDM modulator 57 and is thereby demodulated into digital video and audio signals, which are then output to the signal processor 51. A still another broadcast signal tuned by a third terrestrial digital broadcast tuner 58 is supplied to a third OFDM modulator 59 and is thereby demodulated into digital video and audio signals, which are then output to the signal processor 51. A still another broadcast signal tuned by a fourth terrestrial digital broadcast tuner 58 is supplied to a fourth OFDM modulator 60 and is thereby demodulated into digital video and audio signals, which are then output to the signal processor 51.

The digital television broadcast reception apparatus 100 thus includes the first to fourth terrestrial digital broadcast tuners 54 to 60, and can therefore simultaneously tune four terrestrial digital broadcast signals at most. The first embodiment will be described referring to a case that the digital television broadcast reception apparatus 100 includes four terrestrial digital broadcast tuners. However, the digital television broadcast reception apparatus 100 may alternatively be configured to include five or more terrestrial digital broadcast tuners.

The signal processor 51 selectively performs a predetermined digital signal processing on the digital video and audio signals which are supplied from each of the PSK demodulator 50, first OFDM modulator 55, second OFDM modulator 57, third OFDM modulator 59, and fourth OFDM modulator 61, and then outputs the digital video and audio signals to a graphic processor 62 and an audio processor63.

Also, the signal processor 51 is connected to plural (four in case of the figure) input terminals 64a, 64b, 64c, and 64d. These input terminals 64a to 64d each allow analog video and audio signals to be input from outside of the digital television broadcast reception apparatus 100.

The signal processor 51 selectively digitizes the analog video and audio signals supplied from each of the input terminals 64a to 64d, and performs a predetermined digital signal processing on the digitized video and audio signals. The signal processor 51 thereafter outputs the digitized video and audio signals to a graphic processor 62 and an audio processor 63.

The graphic processor 62 has a function to superpose an OSD signal generated by an on-screen display (OSD) signal generator 65, onto the digital video signal supplied from the signal processor 51, and to output the superposed signals. The graphic processor 62 is capable of selectively outputting an output video signal from the signal processor 51 and an ouput OSD signal from the OSD signal generator 65, and of outputting both signals combined so as to respectively constitute two halves of a screen.

The digital video signal output from the graphic processor 62 is supplied to a video processor 66. A video signal processed by the video processor66 is supplied to a display 14 and also to an output terminal 67. The display 14 displays a video based on a video signal. When an external device is connected to the output terminal 67, the video signal supplied to the output terminal 67 is then input to the external device.

The audio processor 63 converts an input digital audio signal into an analog audio signal in a reproducible format for a speaker 15. Thereafter, the audio processor 63 outputs the analog audio signal to the speaker 15 to reproduce a sound, and derives the analog audio signal to outside through an output terminal 68.

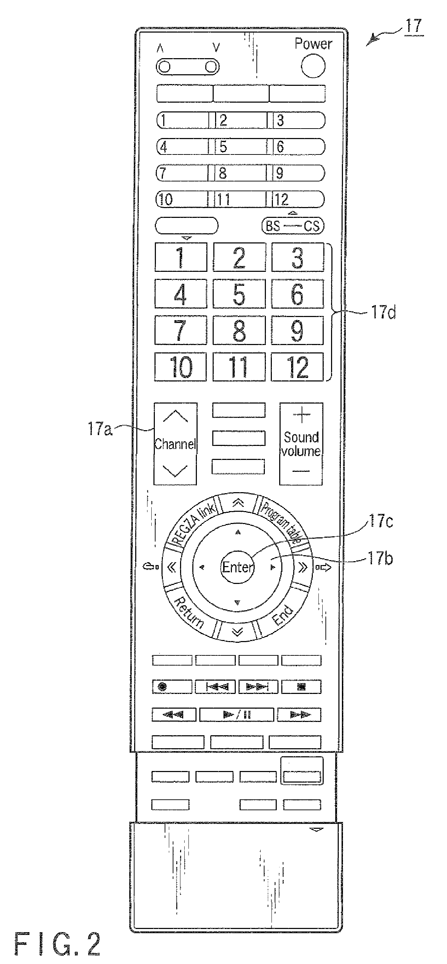

In the digital television broadcast reception apparatus 100, all operations including various receiving operations as described above are totally controlled by a controller 69. The controller 69 includes a central processing unit (CPU), etc., and operation information from the operation module 16 or operation information which is sent from a remote controller 17 and received through a light receiving 18. The controller 69 controls respective units so as to reflect content of the operation information. As illustrated in FIG. 2, the remote controller 17 includes an up/down key 17a, a cursor key (cross key) 17b, an enter key 17c, and a tuning key 17d.

The controller 69 mainly uses a read only memory (ROM) 70 which stores a control program executed by the CPU, a random access memory (RAM) 71 which provides the CPU with a work area, and a non-volatile memory 72 which stores various setting information and control information.

In the first embodiment, settings of the first terrestrial digital broadcast tuner 54, second terrestrial digital broadcast tuner 56, third terrestrial digital broadcast tuner 58, and fourth terrestrial digital broadcast tuner 60 are arranged so as to tune broadcast signals from broadcast stations as follows.

The second terrestrial digital broadcast tuner 56 is put in a setting that continually tunes, for example, a broadcast signal from a channel of a broadcast station A. The third terrestrial digital broadcast tuner 58 is put in a setting that continually tunes, for example, a broadcast signal from a channel of a broadcast station B. The fourth terrestrial digital broadcast tuner 60 is put in a setting that continually tunes, for example, a broadcast signal from a channel of a broadcast station C.

The first terrestrial digital broadcast tuner 54 tunes broadcast signals from the other channels than those of the broadcast stations that are tuned by the second terrestrial digital broadcast tuner 56, third terrestrial digital broadcast tuner 58, and fourth terrestrial digital broadcast tuner 60. That is, the signal processor 51 is continually input, for a background processing, with video and audio signals based on the broadcast signals from the channels of the broadcast stations A, B, and C.

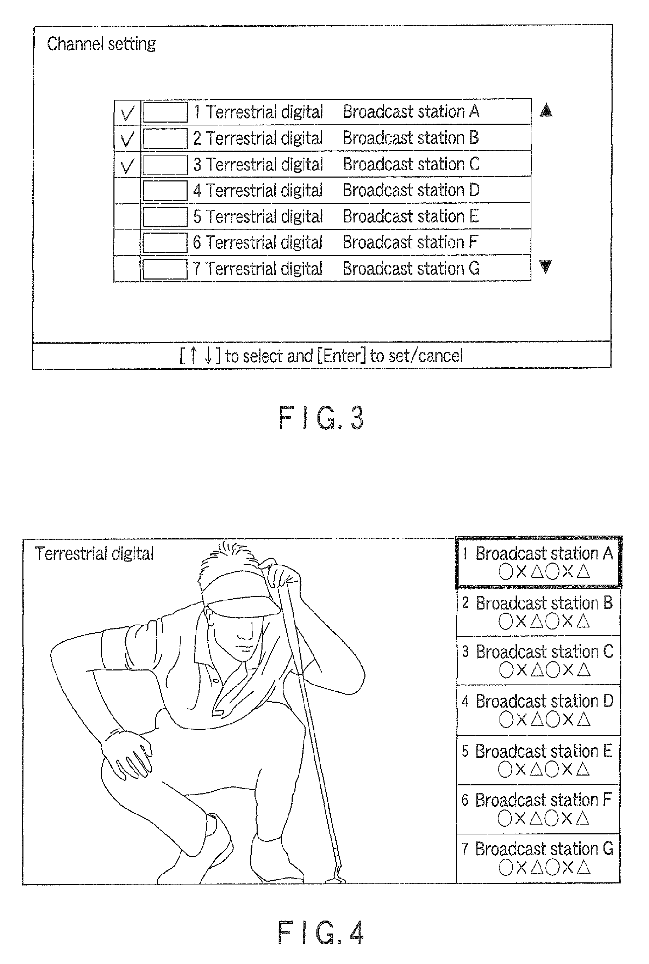

The channels of the respective broadcast signals tuned by second terrestrial digital broadcast tuner 56, third terrestrial digital broadcast tuner 58, and fourth terrestrial digital broadcast tuner 60 are set by a user, for example, with use of the remote controller 17. When the user selects display of a channel setting screen by using the remote controller 17, the controller 69 then performs display control so as to display the channel of as illustrated in FIG. 3 on the display 14. The user selects desired channels by using the cursor key 17b on the remote controller 17, and enters the channels by using the enter key 17c. FIG. 3 illustrates a state where a user selects channels of broadcast stations A, B, and C. In the first embodiment, the user can select three channels at most. The controller 69 assigns the channels selected by the user respectively to the second terrestrial digital broadcast tuner 56, third terrestrial digital broadcast tuner 58, and fourth terrestrial digital broadcast tuner 60.

The broadcast signals to be respectively tuned by the second terrestrial digital broadcast tuner 56, third terrestrial digital broadcast tuner 58, and fourth terrestrial digital broadcast tuner 60 may be appropriately changed for each predetermined period in order from the channel which has been viewed at the highest frequency.

FIG. 4 is a screen view where a channel list used for up/down tuning is displayed on the display 14. A description will now be made of a case that a user uses the up/down key 17a on the remote controller 17 to tune broadcast signals in an ascendant order of the broadcast stations A, B, C, and D.

In this case, the display 14 displays a video based on a video signal obtained by demodulating a broadcast signal from a channel of the broadcast station A tuned by the second terrestrial digital broadcast tuner 56. When the user starts up/down tuning by using the remote controller 17, the controller 69 then performs display control so as to display a channel list along with the video being displayed on the display 14.

The term of channel list means a list which lists channel frames in an order of channels, where the channel frames each associate a channel number, a broadcast station name, and program information of a program being currently broadcast with each other. The channel list lists the channel frames in an ascendant order of the channel numbers. The channel list is displayed extending vertically on the left side of display 14. The display position thereof is not limited there.

The user can select a focus position on the channel list in an ascendant or descendant order so as to correspond to a desired channel frame by using the up/down key 17a. Positions of the channel frames listed on the channel list are fixed, displayed on the display 14. The focus position moves up and down between channel frames on the basis of an input from the up/down key 17a. When the channel list is displayed at first on the display 14, the focus position is initially on, for example, a channel frame corresponding to the video currently displayed on the display 14.

The controller 69 may control the channel list so as to cover part or all of the video currently displayed on the display 14 in a manner of on screen display (OSD) or α-synthesis OSD. The controller 69 may perform display control so as to separate a display region of the channel list and a display region of a video from each other. The speaker 15 outputs a sound corresponding to the video being displayed along with the channel list on the display 14.

In a manner described below, the controller 69 creates program information to be displayed on the channel list for each channel. The controller 69 obtains channel information and program information from service information (SI) contained in a broadcast signal.

The SI includes various information tables defined for selecting programs. For example, the SI includes a service description table (SDT) and an event information table (EIT). The SDT describes, for example, information which associates channel numbers of all channels with names of broadcast stations, respectively. The controller 69 obtains this information as channel information from the SDT, and constantly maintains and appropriately updates this information.

The EIT is program information of a channel corresponding to a broadcast signal tuned by the second terrestrial digital broadcast tuner 56. The EIT describes, for example, information as program information concerning a program, such as a title, start time, content, a genre, and a progress bar of the program. The EIT includes present/following (p/f) information and schedule information.

The p/f information includes, for example, program information of a program being currently broadcast and program information of a program scheduled to be broadcasted next, on the channel of the broadcast station A corresponding to a broadcast signal currently tuned by the second terrestrial digital broadcast tuner 56. The schedule information includes, for example, a program table and program information of programs over the next week on the on the channel of the broadcast station A corresponding to a broadcast signal currently tuned by the second terrestrial digital broadcast tuner 56.

In terrestrial digital broadcasts, for example, in case where the second terrestrial digital broadcast tuner 56 tunes a broadcast signal from the channel of the broadcast station A, only EIT which includes p/f information and schedule information relating to the channel of the broadcast station A is transmitted. The same thing as above also applies to the third terrestrial digital broadcast tuner 58 and the fourth terrestrial digital broadcast tuner 60.

The controller 69 creates a channel list on the basis of the latest program information included in the p/f information. With respect to a channel for which p/f information has not yet been obtained, the controller 69 creates a channel list on the basis of program information described in schedule information. That is, the controller 69 gives higher priority to program information based on p/f information than to schedule information. Although a case of terrestrial digital broadcasts has been described, the same thing as above also applies to another case of BS/CS digital broadcasts.

If the user switches the channel of the broadcast station A to the channel of the broadcast station B by using the up/down key 17a in this state, the focus position on the channel list then moves from the channel frame of the broadcast station A to the channel frame of the broadcast station B.

As a background processing, the controller 69 tunes a broadcast signal from the channel of the broadcast station B by the third terrestrial digital broadcast tuner 58, and performs a signal processing by the signal processor 51. Therefore, the controller 69 can immediately perform display control to display a video on the display 14. Accordingly, without a waiting time, the display 14 switches a video of a program from the broadcast station A to a video of a program from the broadcast station B, and displays the switched latter program.

In the same manner as above, if the user switches the channel of the broadcast station B to the broadcast station C by using the up/down key 17a, the focus position on the channel list then moves from the channel frame of the broadcast station B to the channel frame of the broadcast station C. As a background processing, the controller 69 tunes a broadcast signal from the channel of the broadcast station C by the fourth terrestrial digital broadcast tuner 60, and performs a signal processing by the signal processor 51. Therefore, the controller 69 can immediately perform display control to display a video on the display 14.

Next, if the user switches the channel of the broadcast station C to the channel of the broadcast station D by using the up/down key 17a, the focus position on the channel list then moves from the channel frame of the broadcast station channel frame to the channel frame of the broadcast station D.

The controller 69 performs display control to display a video on the display 14, on the basis of a video signal subjected to a signal processing by the signal processor 51, after switching the broadcast signal tuned by the first terrestrial digital broadcast tuner 54 to the broadcast signal from the channel of the broadcast station D.

While performing display control to become ready for displaying a video of a program of the broadcast station D on the display 14, the controller 69 may maintain a state in which a video based on the broadcast signal from the channel of the broadcast station C tuned by the fourth terrestrial digital broadcast tuner 60 is controlled to be displayed on the display 14.

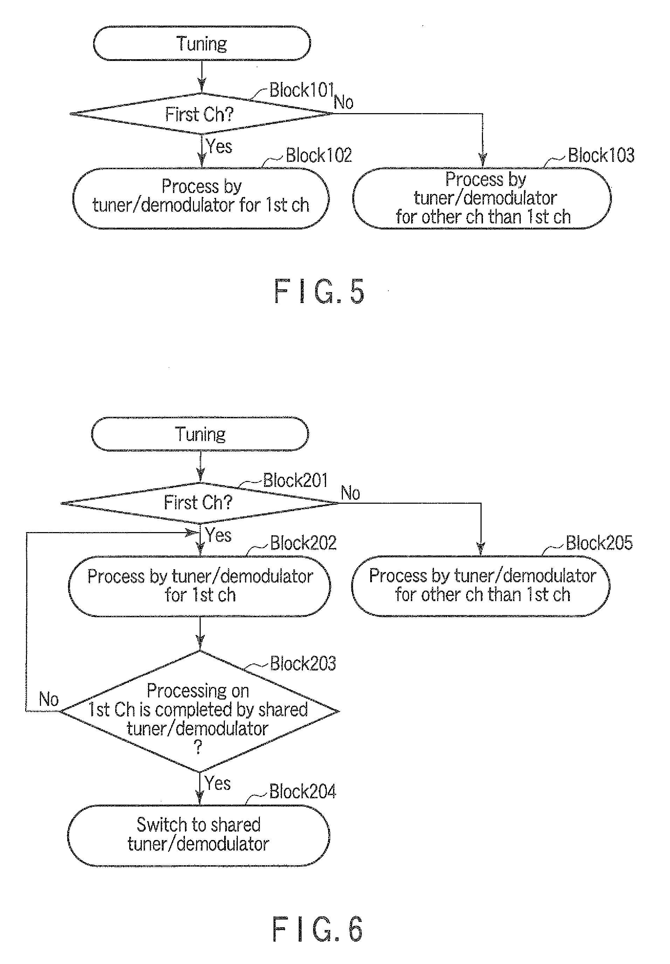

FIG. 5 is a flowchart which describes up/down tuning in the first embodiment described above. Channels which are set to be continually tuned by the second terrestrial digital broadcast tuner 56, third terrestrial digital broadcast tuner 58, and fourth terrestrial digital broadcast tuner 60 are referred to as first channels, respectively. The second terrestrial digital broadcast tuner 56, third terrestrial digital broadcast tuner 58, and fourth terrestrial digital broadcast tuner 60 are now supposed to be terrestrial digital broadcast tuners for the first channels, respectively. The first terrestrial digital broadcast tuner 54 which switches and tunes channels other than the foregoing first channels is now supposed to be a terrestrial digital broadcast tuner for other channels than the first channels.

At first, a user selects a channel by using the up/down key 17a. Then, the controller 69 determines whether the channel selected by the user is a first channel or not (Block 101). If the channel selected by the user is a first channel (Block 101, YES), the controller 69 performs display control to display, on the display 14, a video based on a terrestrial digital broadcast tuner for the first channels and a corresponding OFDM demodulator(Block 102).

Otherwise, if the channel selected by the user is not a first channel (Block 101, NO), the controller 69 performs display control to display, on the display 14, a video based on the terrestrial digital broadcast tuner for other channels than the first channels, which is switched to tune a broadcast signal from the channel selected by the user (Block 103).

Therefore, the digital television broadcast reception apparatus 100 according to the first embodiment is capable of preventing the display 14 from blackout during tuning. Further according to the first embodiment, when a user switches a channel to view by using the remote controller 17, the display 14 is capable of displaying a video without a waiting time, depending on a channel newly switched to.

According to the first embodiment, a channel list is used not only in the case of terrestrial digital broadcasts as described above but also for each of broadcast types (e.g., terrestrial digital broadcasts, satellite digital broadcasts, TV, and radio). There may be respectively different channel lists between broadcast types or one channel list may seamlessly cover all broadcast types. Further, a channel list may show only channels which have been registered as favorites and recorded on a non-volatile memory 72 through a setting made in advance by a user, or may hide channels which have been set to be skipped.

The display 14 may alternatively configured to display videos (or still images) broadcasted at present on channels from which broadcast signals are tuned by the second terrestrial digital broadcast tuner 56, third terrestrial digital broadcast tuner 58, and fourth terrestrial digital broadcast tuner 60, on respectively corresponding channel frames on the channel list.

In the first embodiment, selection of a channel with use of the remote controller 17 may be carried out as up/down tuning by using the cursor key 17d in place of up/down tuning by using the up/down key 17a. Alternatively, selection of a channel may be achieved by selecting a channel by using the tuning key 17d, inputting a three-digit channel number, or selecting a channel on the EPG screen. In this embodiment, the display 14 has been described referring to a case of displaying a channel list as illustrated in FIG. 4 during up/down tuning. However, the channel list may need not be displayed.

Next, the second embodiment will be described. A digital television broadcast reception apparatus 100 according to the second embodiment has the same configuration as the first embodiment illustrated in FIG. 1. In the second embodiment, a first terrestrial digital broadcast tuner 54 is set as a tuner for viewing. That is, if a user selects a desired channel by using a remote controller 17, a display 14 displays a video based on a video signal obtained by demodulating a broadcast signal tuned by the first terrestrial digital broadcast tuner 54.

A second terrestrial digital broadcast tuner 56 is put in a setting that continually tunes, for example, a broadcast signal from a channel of a broadcast station A. A third terrestrial digital broadcast tuner 58 is put in a setting that continually tunes, for example, a broadcast signal from a channel of a broadcast station B. A forth terrestrial digital broadcast tuner 60 is put in a setting that continually tunes, for example, a broadcast signal from a channel of a broadcast station C.

If a user selects a channel in an ascendant or descendant order by using an up/down key 17a on the remote controller 17, a controller 69 switches a broadcast signal to be tuned by the first terrestrial digital broadcast tuner 54 as a monitoring-dedicated tuner

The digital television broadcast reception apparatus 100 requires a time for switching the broadcast signal to be tuned by the first terrestrial digital broadcast tuner 54, for demodulation of a broadcast signal by a first OFDM demodulator 55, and for a digital signal processing by a signal processor 51. By up/down tuning, switching to a next channel in an ascendant or descendant order is allowed after signal processings are performed by these tuners and unit.

Next, a description will be made of a case that a user uses the up/down key 17a to tune broadcast signals of the broadcast stations A, B, D, and D in this ascendant order. In the same manner as in the first embodiment, the display 14 displays a channel list as illustrated in FIG. 4 during up/down tuning. In this case, a video based on a video signal obtained by demodulating a broadcast signal from the channel of the broadcast station A tuned by the first terrestrial digital broadcast tuner 54 is displayed.

In this state, if the user switches the channel of the broadcast station A to the channel of the broadcast station B by using the up/down key 17a, a focus position on a channel list then moves from a channel frame of the broadcast station A to a channel frame of the broadcast station B.

As a background processing, the controller 69 tunes a broadcast signal from the channel of the broadcast station B by the third terrestrial digital broadcast tuner 58, and performs a signal processing by the signal processor 51. Therefore, the controller 69 immediately completes display control to display a video on the display 14.

The controller 69 performs display control to display, on the display 14, a video which is not based on a broadcast signal tuned from the channel of the broadcast station B by the first terrestrial digital broadcast tuner 54 but is based on a broadcast signal from the channel of the broadcast station B by the third terrestrial digital broadcast tuner 58.

Therefore, without a delay, the display 14 can switch a video of a program on the channel of the broadcast station A to a video of a program on the channel of the broadcast station B, and display the latter video. Accordingly, the time to output a video to the display 14 is shortened in up/down tuning.

If a user presses down an enter key 17c on the remote controller 17 with the focus position located on the channel frame of the broadcast station B, the controller 69 switches the first terrestrial digital broadcast tuner 54 so as to tune a broadcast signal corresponding to the channel of the broadcast station B.

After the controller 69 has become completely ready for display control to display, on the display 14, the video based on the broadcast signal tuned from the channel of the broadcast station B by the first terrestrial digital broadcast tuner 54, the controller 69 performs display control to display a video switched to the video based on the broadcast signal from the channel of the broadcast station B which is not tuned by the third terrestrial digital broadcast tuner 58 but is tuned by the first terrestrial digital broadcast tuner 54.

In the same manner as above, if the user switches the channel of the broadcast station B to the channel of the broadcast station C by using the up/down key 17a, the focus position on the channel list moves from the channel frame of the broadcast station B to the channel frame of the broadcast station C. As a background processing, the controller 69 tunes a broadcast signal from the channel of the broadcast station C by the fourth terrestrial digital broadcast tuner 60, and performs a signal processing by the signal processor 51. Therefore, the controller 69 immediately completes display control to display a video on the display 14.

Next, if the user switches the channel of the broadcast station C to the channel of the broadcast station D by using the up/down key 17a, the focus position on the channel list moves from the channel frame of the broadcast station C to the channel frame of the broadcast station D. The controller 69 maintains display control to continue displaying, on the display 14, a video based on a broadcast signal tuned from the channel of the broadcast station C by the fourth terrestrial digital broadcast tuner 60.

In other words, the controller 69 cannot immediately perform display control to display a video of a program on the channel of the broadcast station D because the digital television broadcast reception apparatus 100 is not provided with a terrestrial digital broadcast tuner which is set to continually tune the broadcast signal from the channel of the broadcast station D. Accordingly, until the user presses down the enter key 17c on the remote controller 17 with the focus position located on a channel frame of a broadcast station which the user wants to view, the controller 69 maintains display control to continue displaying a video of a program on the channel of the broadcast station C on the display 14. Therefore, the digital television broadcast reception apparatus 100 according to the second embodiment can prevent the display 14 from blackout during up/down tuning.

If the user continues up/down tuning by using the up/down key 17a and returns the focus position to the channel frame of the broadcast station A on the channel list, the controller 69 performs display control to switch the video of the program on the channel of the broadcast station C to a video based on the broadcast signal tuned from the channel of the broadcast station A by the second terrestrial digital broadcast tuner 56, and to display the video switched to on the display 14.

If the user presses down the enter key 17c on the remote controller 17 with the focus position located on the channel frame of the broadcast station D, the controller 69 switches the first terrestrial digital broadcast tuner 54 so as to tune the broadcast signal from the channel of the broadcast station D. The display 14 switches the video based on the broadcast signal tuned from the channel of the broadcast station C by the fourth terrestrial digital broadcast tuner 60 to the video based on the broadcast signal tuned from the channel of the broadcast station D by the first terrestrial digital broadcast tuner 54, and displays the video switched to.

Even if the user does not press down the enter key 17c on the remote controller 17 with the focus position located on the channel frame of the broadcast station D, the controller 69 may performs display control, after elapse of a predetermined time period, to switch the video of the program on the channel of the broadcast station C to the video of the program on the channel of the broadcast station D, and to display the video switched to on the display 14. That is, the controller 69 performs display control to become ready for displaying the video based on the broadcast signal tuned from the channel of the broadcast station D on the display 14. After having become ready, the controller 69 performs display control to switch the video based on the broadcast signal tuned from the channel of the broadcast station C by the fourth terrestrial digital broadcast tuner 60 to the video based on the broadcast signal tuned from the channel of the broadcast station D by the first terrestrial digital broadcast tuner 54, and to display the video switched to on the display 14.

Alternatively, if the user shortly presses the up/down key 17a, up/down tuning may then be performed by using only the first terrestrial digital broadcast tuner 54. Otherwise, if the user presses long the up/down key 17a, up/down tuning may then be performed by using the first terrestrial digital broadcast tuner 54, second terrestrial digital broadcast tuner 56, third terrestrial digital broadcast tuner 58, and fourth terrestrial digital broadcast tuner 60, as described above.

FIG. 6 is a flowchart illustrating up/down tuning in the second embodiment described above. The term of first channels mentioned herein has the same meaning as in the first embodiment. Also, the term of terrestrial digital broadcast tuners for the first channels has the same meaning as in the first embodiment. The first terrestrial digital broadcast tuner 54 which switches and tunes broadcast signals from channels as targets to tune including the first channels will be referred to as a shared terrestrial digital broadcast tuner.

At first, a user selects a channel by using the up/down key 17a. Then, the controller 69 determines whether the channel selected by the user is a first channel or not (Block 201). If the channel selected by the user is a first channel (Block 201, YES), the controller 69 performs display control to display, on the display 14, a video based on a terrestrial digital broadcast tuner for the first channels and a corresponding OFDM demodulator(Block 202).

Next, the controller 69 switches the shared terrestrial digital broadcast tuner so as to tune a broadcast signal from the first channel. The controller 69 then determines whether the shared terrestrial digital broadcast tuner and a corresponding OFDM demodulator are ready to display a video based on the broadcast signal from the first channel on the display 14 or not (Block 203).

If not ready (Block 203, NO), the controller 69 continues operation of the Block 202. If ready (Block 203, YES), the controller 69 performs display control to switch to the video based on the broadcast signal from the first channel, which is not tuned by the terrestrial digital broadcast tuner for the first channels but is tuned by the shared terrestrial digital broadcast tuner, and to display the video on the display 14 (Block 204).

If the channel selected by the user is not a first channel (Block 201, NO), the controller 69 performs display control to switch the shared terrestrial digital broadcast tuner so as to tune a broadcast signal from the channel selected by the user, and to display, on the display 14, a video based on the broadcast signal tuned from the channel by the shared terrestrial digital broadcast tuner (Block 205). According to the second embodiment, blackout of the display 14 and a delay of video output time during up/down tuning can be eliminated.

## Claims

1. A broadcast reception apparatus (100) **characterized by** comprising:
a first receiver (56, 58, or 60) configured to receive a first broadcast signal from a first channel;
a second receiver (54) configured to receive a second broadcast signal from one of channels as a tuning target other than the first channel; and
a display controller (69) configured to control
to display a first video on the basis of the first broadcast signal received by the first receiver (56, 58, or 60) if a signal instructing about tuning of the first channel is input, or
to display a second video on the basis of the second broadcast signal received by the second receiver (54) if a signal instructing tuning of the channel other than the first channel is input.

2. The apparatus (100) of claim 1, **characterized in that**:
the display controller (69) is configured to control to display a channel list that lists channel frames associated with program information of the first channel and the second channel.

3. The apparatus (100) of claim 2, **characterized in that**:
the display controller (69) is configured to control to display the channel list for each of broadcast types.

4. The apparatus (100) of claim 2, **characterized in that**:
the display controller (69) is configured to control to display the channel list that seamlessly covers the broadcast types.

5. The apparatus (100) of claim 2, **characterized in that**:
the display controller (69) is configured to control to display the channel list on the basis of a show/hide setting of a particular channel.

6. The apparatus (100) of claim 2, **characterized in that:**
the display controller (69) is configured to control to display the first video on a channel frame corresponding to the first channel.

7. The apparatus (100) of claim 1, **characterized by** further comprising:
a display (14) configured to display the first video on the basis of the first broadcast signal or the second video on the basis of the second broadcast signal.

8. A display method applicable to a broadcast reception apparatus comprising a first receiver (56, 58, or 60) configured to receive a first broadcast signal from a first channel, and a second receiver (54) configured to receive a second broadcast signal from one of channels as a tuning target other than the first channel, the method **characterized by** comprising:
receiving (tuning in FIG. 5) the first broadcast signal from the first channel by the first receiver (56, 58, or 60); and
controlling (Block 102) to display a first video on the basis of the first broadcast signal received by the first receiver (56, 58, or 60) if (Yes at Block 101) a signal instructing about tuning of the first channel is input, or controlling (Block 103) to display a second video on the basis of the second broadcast signal received by the second receiver (54) if (No at Block 101) a signal instructing tuning of the second channel other than the first channel is input.
